Europäisches Patentamt

European Patent Office

Office européen des brevets

(11) Veröffentlichungsnummer: **0 003 228**
**B1**

(12) **EUROPÄISCHE PATENTSCHRIFT**

(45) Veröffentlichungstag der Patentschrift: **14.10.81**

(21) Anmeldenummer: **78101691.0**

(22) Anmeldetag: **15.12.78**

(51) Int. Cl.³: **C 08 F 10/00, C 08 F 4/64, C 08 F 297/08**

(54) **Verfahren zur mehrstufigen Polymerisation von Propen oder Buten-1 sowie zur mehrstufigen Copolymerisation von Propen mit Ethen und Buten-1.**

(30) Priorität: **26.01.78 DE 2803280**

(43) Veröffentlichungstag der Anmeldung:
**08.08.79 Patentblatt 79/16**

(45) Bekanntmachung des Hinweises auf die Patenterteilung:
**14.10.81 Patentblatt 81/41**

(84) Benannte Vertragsstaaten:
**BE DE FR GB NL**

(73) Patentinhaber: **CHEMISCHE WERKE HÜLS AG**
**Postfach 1320**
**D-4370 Marl 1 (DE)**

(72) Erfinder: **Baxmann, Fritz, Dr.**
**Im Frett 2**
**D-4370 Marl (DE)**
Erfinder: **Frese, Albert, Dr.**
**Oppauer Strasse 14**
**D-4370 Marl (DE)**

(56) Entgegenhaltungen:
**DE - B - 1 064 718**
**DE - B - 1 076 375**
**FR - A - 1 384 343**
**FR - A - 2 091 602**
**FR - A - 2 093 276**
**US - A - 3 347 955**

Courier Press, Leamington Spa, England.

### Verfahren zur mehrstufigen Polymerisation von Propen oder Buten-1 sowie zur mehrstufigen Copolymerisation von Propen mit Ethen und Buten-1

$\alpha$-Olefine kann man in der Gasphase und auch in der flüssigen Phase polymerisieren. Beide Verfahren haben Vorteile, aber auch Nachteile. Die Gasphasenpolymerisation had den Vorteil, daß keine bzw. nur geringe Mengen an Dispersionsmittel erforderlich sind. Sie hat aber den Nachteil, daß die Einhaltung einer konstanten Polymerisationstemperatur im gesamten Reaktionsraum erheblich schwieriger ist und das erhaltene Poly-$\alpha$-olefin zum Teil in Form von Agglomeraten anfällt. Zudem erfolgt die Polymerisation teilweise direkt an den Wandungen der Apparatur. Diese Wandanbackungen lösen sich während der Polymerisation zum Teil von den Wandungen und gelangen so in Form von Klumpen und Fladen in das normale Poly-$\alpha$-olefinpulver. Diese Poly-$\alpha$-olefinagglomerate führen zu Verstopfungen der Apparatur und verunreinigen das Poly-$\alpha$-olefinpulver. Im Fertigteil führen sie zu Verfärbungen und Stippen. Weiterhin ist es bei der Gasphasenpolymerisation schwierig, den Mischkatalysator gleichmäßig zu verteilen. Ebenso ist die Molekulargewichtseinstellung sowie die Herstellung von Poly-$\alpha$-olefinen mit niedrigen Molekulargewichten und insbesondere die Herstellung von hochisotaktischen Poly-$\alpha$-olefinen, sehr schwierig bzw. nicht möglich. Die in der Gasphasenpolymerisation erhaltenen Poly-$\alpha$-olefine haben zudem relativ niedrige Schüttgewichte.

Diese Nachteile hat die Polymerisation in flüssiger Phase zwar nicht, dafür benötigt man jedoch große Mengen an Dispersionsmitteln. Außerdem kann die Polymerisation nur so lange fortgeführt werden, wie die Suspension rührfähig ist. Bei gasförmig zugesetzten Olefinen wie Propen bei niedrigen Drücken, z.B. 5 bar, nimmt die Polymerisationsgeschwindigkeit mit Abnahme der Rührfähigkeit der Polyolefindispersion ständig ab. Bei sehr geringer Rührfähig keit ist schließlich keine Polymerisation mehr festzustellen. Dieses Ende der Polymerisation tritt im allgemeinen je nach dem Schüttgewicht des Polyolefins bei Feststoffgehalten von etwa 200 bis 300 g Polyolefin/1 Suspension ein. Bei flüssig zugesetzten Olefinen wie Propen oder Buten-1 bei höheren Drücken, z.B. 20 bar, können diese zwar auch dann noch weiterpolymerisieren, wenn die Polyolefinsuspension nicht mehr rührfähig ist. Aus diesen schlecht oder nicht mehr rührfähigen Suspensionen ist die Polymerisationswärme jedoch nicht mehr gleichmäßig abzuführen. Dies führt dazu, daß die Polymerisationstemperatur nicht mehr gehalten werden kann. Es entstehen Polymere mit niedrigen Molekulargewichten, geringerer Kristallinität und niedrigeren Schüttgewichten. Zudem können sich bei den höheren Polymerisationstemperaturen Polymeragglomerate bilden. Auch aus diesen Gründen ist eine Polymerisation in flüssiger Phase im allgemeinen nur bis zu Feststoffgehalten von etwa 200 bis 300 g/l Suspension durchzuführen. Dies bedingt neben hohen Einsatzmengen und entsprechend hohen Kosten an Dispergiermitteln und Katalysatoren auch hohe Gehalte an Katalysatoren im erhaltenen Polyolefin und damit eine aufwendige Aufarbeitung zur weitgehenden Entfernung dieser Katalysatoren.

Damit stellt sich die Aufgabe, ein Verfahren zu finden, das es erlaubt, in einfacher und wirtschaft‐licher Weise Propen oder Buten-1 zu polymerisieren sowie Propen mit Ethen und Buten-1 zu copolymerisieren.

Die Aufgabe wird erfindungsgemäß dadurch gelöst, daß man Propen oder Buten-1 bzw. bei der Copolymerisation Propen mit Ethen und Buten-1 mit Hilfe von Ziegler-Natta-Mischkatalysatoren aus $TiCl_3$ bzw. $TiCl_3 \cdot n$ AlCl$_3$ ($n = 0{,}2$ bis $0{,}6$) einerseits und chlorhaltigen aluminiumorganischen Verbindungen andererseits nach dem Niederdruckverfahren in meheren Polymerisationsstufen polymerisiert, indem man in der ersten Polymerisationsstufe in flüssiger Phase in einem Dispersionsmittel aus $C_3$- bis $C_6$-Kohlenwasserstoffen, in der letzten Polymerisationsstufe in der Gasphase und zwischen der ersten und der letzten Polymerisationsstufe gegebenenfalls zusätzlich in einer oder mehreren weiteren Polymerisationsstufen polymerisiert, wobei man in der ersten Polymerisationsstufe Propen oder Buten-1 polymerisiert und bei der Polymerisation von Buten-1 bis zu einer katalytischen Ausbeute von mindestens 1,03 kg Poly-Buten-1/g $TiCl_3$-Katalysator und bei der Polymerisation von Propen bis zu einer katalytischen Ausbeute von mindestens 6,69 kg Polypropen/g $TiCl_3$-Katalysator polymerisiert, das erhaltene Polyolefin mit der gesamten flüssigen Phase in die nächste Polymerisationsstufe einbringt und das Dispersionsmittel erst in der letzten Polymerisationsstufe entfernt.

Durch die erfindungsgemäße Kombination der Polymerisation von Propen oder Buten-1 in einer ersten Polymerisationsstufe in flüssiger Phase und in einer letzten Polymerisationsstufe in der Gasphase können überraschenderweise die Schwierigkeiten und Nachteile beider Polymerisationsverfahren in einfacher Weise vermieden werden. Die Katalysatorzugabe erfolgt vorzugsweise nur in der ersten Polymerisationsstufe. Sie bereitet hier keine Schwierigkeiten. Überraschenderweise ist aber auch die zusätzliche Katalysatorzugabe in den übrigen Polymerisationsstufen, z.B. in der Gasphase, sowie die gleichmäßige Verteilung der katalysatoren ohne Schwierigkeit möglich. Durch die stufenweise Zugabe der Katalysatoren, insbesondere die Zugabe unterschiedlicher Mischkatalysatoren, in den einzelnen Polymerisationsstufen lassen sich beispielsweise Poly-$\alpha$-olefine mit bestimmter Molekulargewichsverteilung sowie Block- bzw. Sequenzpolymere mit unterschiedlicher Dichte bzw. Stereoisomerie herstellen, wie beispielsweise Propensequenzpolymere mit Sequenzen unterschiedlicher Stereoisomerie. Durch Zugabe verschiedener Olefine in den einzelnen Polymerisationsstufen sind Blockcopolymere herzustellen, beispielsweise Propen-Buten-1-Blockcopolymere. Durch unterschiedliche Molekulargewichtsregelung in den einzelnen Polymerisationsstufen, wie z.B. mit Wasserstoff, erhält man Polymere mit genau vorgegebener Molekulargewichtsverteilung. Besonders überraschend war es, daß bei der Gasphasenpolymerisation in der letzten Polymerisationsstufe weder Agglomerate noch Wandanbackungen entstehen. Man erhält vielmehr ein sehr gut rieselfähiges Polypropen, Polybuten-1 oder Propen-ethen-buten-1-Copolymeres mit hohen Schüttgewichten. Die bei der Gasphasenpolymerisation schwierige Molekulargewichtseinstellung, insbesondere bei der Herstellung von Poly-$\alpha$-olefinen mit niedrigen Molekulargewichten, sowie die Herstellung von Poly-$\alpha$-olefinen mit hoher Dichte, insbesondere die Herstellung hochisotaktischer Poly-$\alpha$-olefine, ist bei dem erfindungsgemäßen Verfahren in einfacher Weise ohne Schwierigkeiten möglich. Die Polymerisationsgeschwindigkeit von gasförmig zugesetztem Propen und/oder Ethen nimmt nicht ab wie bei der Polymerisation nur in flüssiger Phase. Zwischen der ersten und der letzten Polymerisationsstufe kann man gegebenenfalls zusätzlich in einer oder in mehreren weiteren Polymerisationsstufen polymerisieren. In diesen weiteren Polymerisationsstufen kann man sowohl zunächst noch in der flüssigen Phase als auch schon in der Gasphase polymerisieren. In der ersten bzw. den ersten Polymerisationsstufen führt man die Polymerisationswärme durch Kreisgaskühlung, Verdampfungskühlung und/oder Mantelkühlung ab. Vorzugsweise führt man die Polymerisationswärme durch Verdampfungskühlung ab. In der letzten Polymerisationsstufe verdampft man das restliche Dispersionsmittel mit Hilfe der Polymerisationswärme, das aus dem Reaktionsraum ausgetragen wird. Das ausgetragene Dispersionsmittel, gegebenenfalls mit den nicht umgesetzten $\alpha$-Olefinen, kann beim Ansteigen der Polymerisationstemperatur in der letzten Polymerisationsstufe nach Kühlung und gegebenenfalls Kondensation bzw. Teilkondensation ganz oder teilweise in diese Polymerisationsstufe zurückgeführt werden. Vorzugsweise verdampft man das Dispersionsmittel weitesgehend in dieser letzten Polymerisationsstufe. Man erhält ein rieselfähiges Poly-$\alpha$-olefin mit hohem Schüttgewicht, das nur noch sehr geringe Mengen an gasförmigem bzw. adsorbiertem Dispersionsmittel enthält. Durch eine kurzzeitige Behandlung mit Gasen, insbesondere inerten Gasen wie Stickstoff und/oder überhitztem Wasserdampf, erhält man ein vom restlichen Dispersionsmittel völlig befreites Poly-$\alpha$-olefin. Die Behandlung mit überhitztem Wasserdampf hat den Vorteil, vorhandene Katalysatorreste zu inaktivieren.

Als Polymerisationsreaktoren benutzt man in der ersten Polymerisationsstufe vorzugsweise Rührkessel. In den zusätzlichen Polymerisationsstufen zwischen der ersten und der letzten Polymerisationsstufe setzt man, soviet es sich noch um rührfähige Suspensionen handelt, ebenfalls vorzugsweise Rührkessel ein. Bei höheren Feststoffgehalten eignen sich beispielsweise Mischer. In der letzten Polymerisationsstufe kann man ebenfalls in einem Mischer polymerisieren. Vorzugsweise polymerisiert man in der letzten Stufe jedoch in einem Wirbelbett.

Die Polymerisation der $\alpha$-Olefine erfolgt mit Hilfe von Ziegler-Natta-Katalysatoren. Im allgemeinen polymerisiert man bei Temperaturen bis etwa 120°C, vorzugsweise bei 20 bis 90°C, insbesondere bei 30 bis 70°C und Drücken bis etwa 50 bar. In den einzelnen Polymerisationsstufen kann man bei unterschiedlicher Temperatur und unterschiedlichen Drücken polymerisieren. Bei tieferen Polymerisationstemperaturen erhält man Polymere mit einem höheren isotaktischen Anteil. Tiefere Polymerisationstemperaturen sind insbesondere bei Verwendung von Buten-1 als Monomeres günstig, da Polybuten-1 bei höheren Temperaturen, über 50°C, vom Dispersionsmittel angequollen wird. Die Polymerisation kann kontinuierlich und diskontinuierlich durchgeführt werden. Bevorzugt polymerisiert man kontinuierlich.

Geeignete $\alpha$-Olefine sind Propen und Buten-1. Ethen ist als Comonomeres geeignet. Gasförmige $\alpha$-Olefine wie z.B. Propen bei niedrigen Drücken, bis etwa 10 bar, setzt man in jeder Polymerisationsstufe zu. Flüssige Olefine wie Propen bei höheren Drücken, über 10 bar und Buten-1 können in der Gesamtmenge in der ersten Polymerisationsstufe zugegeben werden, man kann sie auch zu jeder Polymerisationsstufe zusetzen. Geeignete Dispersionsmittel sind Propan, Propen, n-Butan, iso-Butan, Buten-1, Buten-2, Pentane und Hexane sowie Mischungen von diesen. Der Einsatz von Propen bzw. Buten-1 als Dispersionsmittel bei der Propen- bzw. Buten-1-Polymerisation had den Vorteil, daß man außer dem Monomeren kein zusätzliches Dispersionsmittel benötigt. Buten-2 hat als Dispersionsmittel den Vorteil, daß es die Polymerisation und auch die Copolymerisation der Olefine beschleunigt. Hierbei polymerisiert das Buten-2 nicht mit. Die aliphatischen Dispersionsmittel wie Propan, n-Butan, iso-Butan, die Pentane und Hexane sind sämtlichen Ziegler-Natta-Katalysatoren gegenüber völlig inert. Vorzugsweise setzt man von diesen n-Butan und iso-Butan ein. Sie haben den Vorteil, daß relative niedrige Drücke erforderlich sind und sie in der letzten Polymerisationsstufe mit Hilfe der Polymerisationswärme leicht entfernt werden können.

Geeignete Ziegler-Natta-Kontakte sind Mischkontakte aus Titan-III-chloriden und chlorhaltigen metallorganischen Verbindungen des Aluminiums, Geeignete Titantrichloride sind vorzugsweise Titan-Aluminiumchloride der Zusammensetzung $TiCl_3 \cdot n\,AlCl_3$ ($n = 0,2$ bis $0,6$), insbesondere in der $\gamma$- und $\delta$-Modifikation, wie sie durch Reduktion von Titantetrachlorid mit Aluminiummetall oder aluminiumorganischen Verbindungen und gegebenenfalls Aktivierung, z.B. durch Mahlen, entstehen. Die durch Reduktion mit aluminiumorganischen Verbindungen erhaltenen Titan-Aluminiumchloride werden vorzugsweise nach der Reduktion bei Temperaturen von 70 bis 150°C getempert. Bei der Reduktion mit aluminiumorganischen Verbindungen kann das erhaltene Titantrichlorid durch Dekantieren oder Filtrieren von der Hauptmenge der aluminiumorganischen Verbindungen abgetrennt werden. Es kann aber auch nicht isoliert mit der aluminiumorganischen Verbindung, im wesentlichen Alkylaluminiumdichlorid, eingesetzt werden. Diese geeigneten Titan-Aluminiumchloride $TiCl_3 \cdot n \ AlCl_3$ sind im Gegensatz zu den in der DE—PS 12 09 297 und der DE—PS 12 24 043 beschriebenen Titan-Aluminiumchloriden bevorzugt thermisch instabil. Thermisch stabile Titan-Aluminiumchloride sind überraschenderweise wenig geeignet. Die Titanchloride können mit Zusatzstoffen wie Elektronendonatoren aktiviert werden und zudem auf anorganischen Trägern niedergeschlagen werden. Geeignet sind auch Titanchloride, aus denen das $AlCl_3$ durch Extraktion weitgehend entfernt ist.

Geeignete chlorhaltige aluminiumorganische Verbindungen sind vorzugsweise die Dialkylaluminiumchloride, insbesondere das Diethylaluminiumchlorid. Setzt man das nicht isolierte Titantrichlorid mit Alkylaluminiumdichlorid ein, so wird dieses durch Umsetzung mit Aluminiumtrialkyl, insbesondere Aluminiumtriethyl, in das Dialkylaluminiumchlorid, insbesondere das Diethylaluminiumchlorid, überführt. Weitere geeignete chlorhaltige aluminiumorganische Verbindungen sind die Alkylaluminiumsesquichloride und die Alkylaluminiumdichloride, diese allerdings vorzugsweise in Kombination mit Elektronendonatoren.

Bevorzugt setzt man den gesamten Katalysator in der ersten Polymerisationsstufe zu. Man kann aber in jeder der folgenden Polymerisationsstufen Katalysator bzw. Teile des Mischkatalysators nachgeben. Man kann auch unterschiedliche Katalysatoren bzw. Teile des Mischkatalysators in den folgenden Polymerisationsstufen nachgeben oder die katalysatoren bzw. Teile der Mischkatalysatoren durch Umsetzungen in der oder den folgenden Polymerisationsstufen variieren.

Die nach dem erfindungsgemäßen Verfahren hergestellten Poly-$\alpha$-olefine haben überraschender-weise außer der sehr guten Rieselfähigkeit bei hohen Schüttgewichten eine äußerst geringe innere Oberfläche, die nur etwa 10% der inneren Oberfläche der in flüssiger Phase erhaltenen Poly-$\alpha$-olefine beträgt. Ein in flüssiger Phase, beispielsweise in einer Hexandispersion, erhaltenes Polypropen hat eine innere Oberfläche von 3,5 m²/g. Ein erfindungsgemäß hergestelltes Polypropen had dagegen nur eine innere Oberfläche von 0,3 m²/g und weniger. Polyolefin mit besonders niedriger innerer Oberfläche erhält man bei dem erfindungsgemäßen Verfahren mit Hilfe von Katalysatoren, die mit aluminium-organischen Verbindungen vorreduziert sind, wie zum Beispiel einem $TiCl_3 \cdot 0,5 \ AlCl_3$, das man durch Reduktion von Titantetrachlorid mit Ethylaluminiumsesquichlorid erhält. Ein mit Hilfe dieses Katalysators nach dem erfindungsgemäßen Verfahren hergestelltes Polypropen hat eine innere Oberfläche von weniger als 0,01 m²/g. Dieses Polypropen had eine sehr gute Reiselfähigkeit ohne Stauben. Man kann es daher als Pulver sehr gut verarbeiten und benötigt kein zusätzlich Verarbeitung zum Granulat.

## Beispiel 1

Die Polymerisation erfolgt in einem druckfesten 2 m³-Rührkessel mit Standregelung und Verdampfungskühlung mit druckfestem Gebläse, in einem nachgeschalteten liegenden 2 m³-Reaktor mit einem Mischrührwerk und anschließend in einem Wirbelbett mit einem Reaktionsraum von 2 m³.

In den 2 m³-Polymerisationskessel gibt man über eine Pumpe stündlich 200 kg flüssiges Propen, das auf—10°C abgekühlt ist. In den Propenstrom dosiert man stündlich 15 g eines thermisch instabilen $TiCl_3 \cdot 0,3 \ AlCl_3$ in 50 g Propan und getrennt davon 25 g $Al(C_2H_5)_2Cl$ zu. In den Polymerisationskessel gibt man zusätzlich stündlich 80 N1 Wasserstoff. Die Polymerisationstemperatur wird durch Verdampfungskühlung auf 78°C, Druck 35 bar, gehalten. Die in diesem Polymerisationskessel erhaltene Polypropensuspension wird kontinuierlich durch einen von der Standhöhe geregelten Bodenschiebar in einen liegenden 2 m³-Reaktor mit einem Mischrührwerk eingetragen. Diese Suspension enthält 52 kg Polypropen in 48 kg Propen. Der liegende 2 m³-Reaktor ist mit Verdampfungskühlung und mit einem Kühlmantel ausgerüstet. Hierdurch wird die Polymerisationstemperatur auf 74°C, Druck 30 bar, gehalten. In den Reaktor gibt man stündlich 50 Nl Wasserstoff zu. Der Feststoffgehalt steigt in diesem Reaktor auf 85 kg Polypropen in 15 kg Propen an. Dieses rieselfähige Pulver wird kontinuierlich über eine druckfeste Schleuse in ein Wirbelbett mit einem Reaktionsraum von 2 m³ eingetragen, in dem das Polypropen mit gasförimigem Propen, das in einem Kreislauf mit einem Kühler auf 30°C gekühlt und gefördert wird, aufgewirbelt und bei 70°C, Druck 16 bar, weiterpolymerisiert wird. Dem Kreisgas setzt man stündlich 100 Nl Wasserstoff zu. Uber einen Schleusenaustrag gelangt das Polypropen, das eine Restfeuchte von 4% hat, in einen Wirbelbunker, in dem man die Propenrestmenge mit Stickstoff, dem überhitzter Wasserdampf von 120°C zugesetzt ist, bei Normaldruck entfernt. Man erhält stündlich 192 kg eines gut rieselfähigen Polypropens mit folgenden Eigenschaftswerten:

**0 003 228**

| | |
|---|---|
| Viskositätszahl J | 350 cm³/g |
| $MF_{190/5}$ | 2,5 g/10 min |
| heptanlöslicher Anteil | 6,8% |
| Dichte | 0,906 g/cm³ |
| Streckspannung | 34 N/mm² |
| Reißfestigkeit | 37 N/mm² |
| Reißdehnung | 688% |
| Schüttgewicht | 403 g/l |
| Aschegehalt | 0,01% |
| innere Oberfläche | 0,3 m²/g |

Aus diesem Polypropen lassen sich farblose stippenfreie Fertigteile herstellen. Setzt man statt des handelsüblichen $TiCl_3$ . 0,3 $AlCl_3$ eine Suspension von thermisch instabilem $TiCl_3$ . 0,5 $AlCl_3$ ein, die man durch Reduktion von 1 Mol $TiCl_4$ mit 0,7 Mol $Al_2(C_2H_5)_3Cl_3$ (als 20 prozentige Lösung in Hexan) bei 0°C innerhalb einer Reaktionszeit von 6 h, einer Nachreaktionszeit von 6 h bei 0 bis 10°C und durch anschließende Temperung bei 130°C (6 h) erhalten hat, und die man mit 1,2 Mol $Al(C_2H_5)_3$/Mol $TiCl_3$ . 0,5 $AlCl_3$ aktiviert, so erhält man Polypropylen, das ein Schüttgewicht von 425 g/l, eine innere Oberfläche von <0,01 m²/g und eine ausgezeichnete Rieselfähigkeit ohne Stauben had. Die übrigen Eigenschaftswerte entsprechen denen des mit dem handelsüblichen Titantrichloride erhaltenen Polypropens.

Vergleichsbeispiel 1a

Die Polymerisation erfolgt in dem in Beispiel 1 eingesetzten Wirbelbett, in dem 50 kg trockenes und mit Stickstoff vorbehandeltes Polypropen vorgelegt sind. Dieses Polypropen wird mit gasförmigem Propen, das in einem Kreislauf mit einem Kühler gekühlt und gefördert wird, aufgewirbelt. In das Kreisgas gibt man über einen Verdampfer 25 g $Al(C_2H_5)_2Cl$ zu. Anschließend dosiert man in das kreisgas über den Verdampfer stündlich 25 g $Al(C_2H_5)_2Cl$ sowie 100 Nl Wasserstoff. Aus das aufgewirbelte Polypropen verdüst man eine Suspension von 15 g $TiCl_3$. 0,3 $AlCl_3$ in 50 g Propan und dosiert anschließend stündlich 15 g $TiCl_3$ . 0,3 $AlCl_3$ in 50 g Propan zu. Man polymerisiert bei einer Temperatur von 78°C und einem Druck von 16 bar. Den Druck von 16 bar stellt man durch Propenzugabe in das Kreisgas ein und hält ihn durch weitere Propenzugabe konstant. Die Polymerisationstemperatur von 78°C wird durch Kühlen des Kreisgases auf 30°C weitgehend gehalten. Über einen Schleusenaustrag bringt man das Polypropen in einem Wirbelbunker, in dem man die Propenrestgasmenge mit Stickstoff, dem überhitzter Wasserdampf von 120°C zugesetzt ist, bei Normaldruck entfernt. Man erhält stündlich 45 kg eines Polypropylens, das aus einem Pulver mit klumpen- und fladenförmigen Agglomeraten besteht. Nach dem Ausfahren des Versuches bleiben an den Wandungen der Apparatur Wandanbackungen zurück. Das erhaltene Polypropylen hat folgende Eigenschaftswerte:

| | |
|---|---|
| Viskositätszahl J | 540 cm³/g |
| $MF_{190/5}$ | 0,3 g/10 min |
| heptanlöslicher Anteil | 17,4% |
| Dichte | 0,902 g/cm³ |
| Streckspannung | 26 N/cm³ |
| Reißfestigkeit | 32 N/cm³ |
| Reißdehnung | 467% |
| Schüttgewicht (vom Pulveranteil) | 335 g/l |

Die aus diesem Polypropen hergestellten Fertigteile sind verfärbt und haben Strippen.

5

# 0 003 228

## Beispiel 2

Die Polymerisation erfolgt in einem druckfesten 2 m³-Ruhrkessel mit Standregelung und Verdampfungskühlung mit druck festem Gebläse und einem nachgeschalteten Wirbelbett mit einem Reaktionsraum von 2 m³.

Die polymerisation führt man in der ersten Stufe den Angaben des Beispiels 1 entsprechend durch. Die in dem Polymerisationskessel erhaltene Polypropensuspension wird kontinuierlich durch einen von der Standhöhe geregelten Bodenschieber in ein Wirbelbett mit einem Reaktionsraum von 2 m³ eingetragen. Die den Polymerisationskessel verlassende Suspension enthält 52 kg Polypropen in 48 kg Propen. In dem Wirbelbett wird das Polypropen mit gasförmigem Propen, das in einem Kreislauf mit einem Kühler gekühlt und gefördert wird, aufgewirbelt. Bei 75°C und einem Druck von 22 bar polymerisiert man weiter. Dem Kreisgas setzt man stündlich 120 Nl Wasserstoff zu. Über einen Schleusenaustrag gelangt das Polypropylen, das eine Restfeuchte von 23% hat, in einen Wirbelbunker, in dem man die Propenrestgasmenge mit Stickstoff, dem überhitzter Wasserdampf von 120°C zugesetzt ist, bei Normaldruck entfernt. Man erhält stündlich 154 kg eines gut rieselfähigen Polypropens mit folgenden Eigenschaftswerten:

| | |
|---|---|
| Viskositätszahl J | 340 cm³/g |
| $MF_{190/5}$ | 2,6 g/10 min |
| heptanlöslicher Anteil | 6,5% |
| Dichte | 0,906 g/cm³ |
| Streckspannung | 35 N/mm² |
| Reißfestigkeit | 36 N/mm² |
| Reißdehnung | 673% |
| Aschegehalt | 0,01% |
| innere Oberfläche | 0,3 m²/g |

## Beispiel 3

Die Polymerisation erfolgt in der in Beispiel 1 angegebenen Apparatur.

In den 2 m³-Polymerisationskessel gibt man stündlich 50 kg flüssiges n-Butan. In den n-Butan-Strom dosiert man stündlich 16 g eines $TiCl_3$ . 0,5 $AlCl_3$-Katalysators in 50 g n-Butan, den man durch Reduktion von 1 Mol $TiCl_4$ mit 0,7 Mol $Al_2(C_2H_5)_3Cl_3$ (als 20 prozentige Lösung in Hexan) bei —2°C innerhalb einer Reaktionszeit von 6 h, einer Nachreaktionszeit von 6 h bei —2°C bis +10°C, Temperung bei 150°C (6 h) und anschließender Abtrennung erhalten hat. Getrennt davon gibt man stündlich 27 g $Al(C_2H_5)_2Cl$ zu. Zusätzlich gibt man stündlich 160 kg flüssiges Propen und 100 Nl Wasserstoff in den Polymerisationskessel. Die Polymerisationstemperatur hält man durch Verdampfungskühlung auf 80°C bei einem Druck von 35 bar. Die in diesem Polymerisationskessel erhaltene Polypropensuspension trägt man kontinuierlich durch einen von der Standhöhe geregelten Bodenschieber in einen liegenden 2 m³-Reaktor mit einem Mischrührwerk. Die Suspension enthäld 51 kg Polypropen in 49 kg eines Propen-n-Butan-Gemisches. Der Reaktor ist mit einer Mantel- und Kreisgaskühlung ausgerüstet. Hiermit hält man die Polymerisationstemperatur auf 76°C bei einem Druck von 26 bar. In den Reaktor gibt man stündlich 1600 Nl Ethen und 100 Nl Wasserstoff. Der Feststoffgehalt steigt in diesem Reaktor auf 72 kg Polyolefin in 28 kg eines n-Butan-Propen-Gemisches an. Dieses rieselfähige Pulver trägt man kontinuierlich über eine druckfeste Schleuse in ein Wirbelbett mit einem Reaktionsraum von 2 m³ ein, in dem das Polyolefin mit zugesetztem Buten-1, dem n-Butan sowie dem restlichen noch nicht polymerisierten Propen, die in einem Kreislauf mit einem Kühler auf 25°C gekühlt und gefördert werden, aufgewirbelt wird. Bei 75°C und einem Druck von 7 bar polymerisiert man weiter. Den Druck von 7 bar hält man durch Zugabe von Buten-1 aufrecht.

Die in dem Kühler des Kreislaufes teilkondensierten Kohlenwasserstoffe trennt man ab. Die restlichen flüchtigen Kohlenwasserstoffe entfernt man, wie in den Beispielen 1 und 2 beschrieben. Man erhält stündlich 178 kg eines Propen — Propen-Ethen — Buten-1-Propen-Copolymeren mit folgen Eigenschaftswerten:

6

| | |
|---|---|
| Viskositätszahl J | 290 cm³/g |
| MF$_{190/5}$ | 3,0 g/10 min |
| Streckspannung | 29 N/mm² |
| Reißfestigkeit | 37 N/mm² |
| Reißdehnung | 745% |
| Aschegehalt | 0,01% |

Beispiel 4

Die Polymerisation erfolgt in einem druckfesten 2 m³-Rührkessel und einem nachgeschalteten liegenden 4 m³-Reaktor mit einem Mischrührwerk.

In den 2 m³-Polymerisationskessel gibt man über eine Pumpe stündlich 100 kg flüssiges Buten-1. In den Buten-1-Strom dosiert man stündlich 35 g eines thermisch instabilen $TiCl_3$ . 0,3 $AlCl_3$ in 150 g n-Butan. Getrennt davon gibt man stündlich 50 g $Al(C_2H_5)_2Cl$ und 50 Nl Wasserstoff zu. Die Polymerisationstemperatur hält man durch die Verdampfungskühlung auf 30°C, bei einem Druck von 4 bar. Die in diesem Polymerisationskessel erhaltene Polybuten-1-Suspension wird kontinuierlich über eine vom Stand gesteuerte Pumpe in einen liegenden 4 m³-Reaktor mit einem Mischrührwerk gefördert. Diese Suspension enthält 36kg Polybuten-1 in 64 kg Buten-1. Der liegende 4 m³-Reaktor ist mit Verdampfungskühlung und mit einem Kühlmantel ausgerüstet. Hierdurch hält man die Polymerisationstemperatur auf 40°C bei einem Druck von 5 bar. In den Reaktor gibt man stündlich 50 Nl Wasserstoff zu. Der Feststoffgehalt steigt in diesem Reaktor auf 78 kg Polybuten-1 in 22 kg Buten-1 an. Über einen Schleusenaustrag gelangt das rieselfähige Polybuten-1 in einen Wirbelbunker, in dem die Buten-1-Restgasmenge entfernt wird, wie in den Beispielen 1 und 2 beschrieben. Man erhält stündlich 78 kg eines Polybuten-1 mit folgenden Eigenschaftswerten:

| | |
|---|---|
| Viskositätszahl J | 320 cm³/g |
| MF$_{190/5}$ | 3,4 g/10 min |
| Streckspannung | 24 N/mm² |
| Reißfestigkeit | 37 N/mm² |
| Reißdehnung | 348% |
| etherlöslicher Anteil | 3,8% |
| Aschegehalt | 0,04% |
| Schüttgewicht | 252 g/l |

**Patentansprüche**

1. Verfahren zur mehrstufigen Polymerisation von Propen oder Buten-1 sowie zur mehrstufigen Copolymerisation von Propen mit Ethen und Buten-1 nach dem Niederdruckverfahren mit Hilfe von Ziegler-Natta-Mischkatalysatoren aus $TiCl_3$ bzw. $TiCl_3$ . n $AlCl_3$ (n = 0,2 bis 0,6) einerseits und chlorhaltigen aluminium-organischen Verbindungen andererseits, wobei man in der ersten Polymerisationsstufe in flüssiger Phase in einem Dispersionsmittel aus $C_3$- bis $C_6$-Kohlenwasserstoffen polymerisiert, in der letzten Polymerisationsstufe in der Gasphase polymerisiert und man zwischen der ersten und der letzten Polymerisationsstufe gegebenenfalls zusätzlich in einer oder mehreren weiteren Polymerisationsstufen polymerisiert, dadurch gekennzeichnet, daß man in der ersten Polymerisationsstufe Propen oder Buten-1 polymerisiert und bei der Polymerisation von Buten-1 bis zu einer katalytischen Ausbeute von mindestens 1,03 kg Poly-Buten-1/g $TiCl_3$-Katalysator und bei der Polymerisation von Propen bis zu einer katalytischen Ausbeute von mindestens 6,69 kg Polypropen/g $TiCl_3$-Katalysator polymerisiert, das erhaltene Polyolefin mit der gesamten flüssigen Phase in die nächste Polymerisationsstufe einbringt und das Dispersionsmittel erst in der letzten Polymerisationsstufe entfernt.

2. Verfahren nach Anspruch 1, dadurch gekennzeichnet, daß man in der bzw. in den ersten Polymerisationsstufen die Polymerisationswärme durch Kreisgaskühlung, Verdampfungskühlung und/oder Mantelkühlung abführt und in der letzten Polymerisationsstufe das restliche Dispersionsmittel mit Hilfe der Polymerisationswärme verdampft und entfernt.

3. Verfahren nach Anspruch 1 und 2, dadurch gekennzeichnet, daß man in der ersten bzw. den ersten Polymerisationsstufen in Rührkesseln polymerisiert und die Polymerisation in einem Mischer bzw. mehreren Mischern weiterführt.

4. Verfahren nach den Ansprüchen 1 bis 3, dadurch gekennzeichnet, daß man die letzte Polymerisationsstufe in einem Wirbelbett durchführt.

## Claims

1. Process for the multi-step polymerisation of propene or butene-1, and for the multi-step copolymerisation of propene with ethene and butene-1 using the low pressure process, with the aid of Ziegler-Natta mixed catalysts of $TiCl_3$ or $TiCl_3$ . n $AlCl_3$ (n = 0.2 to 0.6) on the one hand, and chlorine containing aluminium-organic compounds on the other hand, whereby in the first polymerisation step the polymerisation is carried out in a dispersion agent of $C_3$- to $C_6$- hydrocarbons, in the final polymerisation step the polymerisation is carried out in the gaseous phase and between the first and the final polymerisation steps the polymerisation is carried out additionally if necessary in one or several further polymerisation steps, characterised in that, in the first polymerisation step propene or butene-1 is polymerised, and in the polymerisation of butene-1, a catalytic yield of at least 1.03 kg of polybutene-1/g $TiCl_3$ catalyst is polymerised and in the polymerisation of propene, a catalytic yield of at least 6.69 kg of polypropene/g $TiCl_3$ catalyst is polymerised, the polyolefine obtained is introduced into the next polymerisation step with the complete liquid phase, and the dispersion agent is not removed until the final polymerisation step.

2. Process according to claim 1, characterised in that, in the first polymerisation step, or steps, the heat of polymerisation is conducted away by recirculated gas cooling, cooling by evaporation and/or jacket cooling, and in the final polymerisation step the remaining dispersion agent is evaporated by the heat of polymerisation and removed.

3. Process according to claims 1 and 2, characterised in that, in the first polymerisation step, or steps, the polymerisation is continued in a mixer or in several mixers.

4. Process according to claims 1 to 3, characterised in that, the final polymerisation step is carried out in a fluidised bed.

## Revendications

1. Procédé pour la polymérisation en plusieurs étapes du propène ou du butène-1 ainsi que pour la copolymérisation en plusieurs étapes du propène avec l'éthène et le butène-1 selon le procédé à basse pression à l'aide de catalyseurs mixtes de Ziegler-Natta de $TiCl_3$ resp. de $TiCl_3$ . n $AlCl_3$ (n = 0,2 à 0,6) d'une part, et de combinaisons chlorées organiques contenant de l'aluminium d'autre part, dans lequel, dans la première étape de polymérisation, on polymérise en phase liquide dans un dispersant composé d'hydrocarbures en $C_3$ à $C_6$, dans la dernière phase de polymérisation on polymérise en phase gazeuse, et le cas échéant, entre la première et dernière étape de polymérisation, on polymérise encore en une ou plusieurs autres étapes de polymérisation, caractérisé par le fait que dans la première étape de polymérisation, on polymérise le propène ou le butène-1 et qu'au cours de la polymérisation du butène-1, on polymérise jusqu'à un rendement catalytique d'au moins 1,03 kg de poly-butène-1/g de catalyseur de $TiCl_3$, et qu'au cours de la polymérisation du propène, on polymérise jusqu'à un rendement catalytique d'au moins 6,69 kg de polypropène/g de catalyseur de $TiCl_3$, on introduit la poly-oléfine obtenue avec toute la phase liquide dans l'étape suivante de polymérisation et qu'on élimine le dispersant seulement dans la dernière étape de polymérisation.

2. Procédé selon la revendication 1, caractérisé par le fait que, dans la première resp. dans les premières étapes de polymérisation, on évacue la chaleur de polymérisation par une réfrigération à gaz recyclé, une réfrigération par évaporation et/ou réfrigération par enveloppe et que dans la dernière étape de polimérisation, on évapore et élimine le reste du dispersant avec la chaleur de polymérisation.

3. Procédé selon les revendications 1 et 2, caractérisé par le fait que, dans la première resp. les premières étapes de polymérisation, on polymérise dans des chaudières avec agitation et poursuit la polymérisation dans un mélangeuer resp. plusieurs mélangeurs.

4. Procédé selon les revendications 1 à 3, caractérisé par le fait qu'on effectue la dernière étape de polymérisation dans un lit fluidisé.